## Europäisches Patentamt

## European Patent Office

## Office européen des brevets

(11) Veröffentlichungsnummer: **0 213 350**
**B1**

(12) **EUROPÄISCHE PATENTSCHRIFT**

(45) Veröffentlichungstag der Patentschrift:
**18.01.89**

(21) Anmeldenummer: **86109727.7**

(22) Anmeldetag: **16.07.86**

(51) Int. Cl.⁴: **B 01 D 3/28**, F 28 D 3/00,
C 11 B 3/14

(54) **Vorrichtung zur destillativen Abtrennung von flüchtigen Substanzen aus Flüssigkeiten.**

(30) Priorität: **16.08.85 DE 3529328**

(43) Veröffentlichungstag der Anmeldung:
**11.03.87 Patentblatt 87/11**

(45) Bekanntmachung des Hinweises auf die Patenterteilung:
**18.01.89 Patentblatt 89/3**

(84) Benannte Vertragsstaaten:
**BE DE FR GB IT NL SE**

(56) Entgegenhaltungen:
**DE-A- 2 511 144
DE-C- 18 070
FR-A- 1 128 379
US-A- 2 247 152
US-A- 2 355 414
US-A- 2 438 988**

**Die Akte enthält technische Angaben, die nach dem Eingang der Anmeldung eingereicht wurden und die nicht in dieser Patentschrift enthalten sind.**

(73) Patentinhaber: **Extraktionstechnik Gesellschaft für Anlagenbau m.b.H.,
Humboldtstrasse 56 Postfach 76 03 69,
D-2000 Hamburg 76 (DE)**

(72) Erfinder: **Weber, Klaus, Richterstrasse 13,
D-2000 Hamburg 76 (DE)**
Erfinder: **Meyer, Joachim, Moorburger Elbdeich 184,
D-2100 Hamburg 90 (DE)**

(74) Vertreter: **Planker, Karl-Josef, Dipl.-Phys., c/o Deutsche Babcock Anlagen AG Parkstrasse 29 Postfach 4 + 6,
D-4150 Krefeld 11 (DE)**

## Beschreibung

Die Erfindung betrifft eine Vorrichtung gemäss dem Oberbegriff des Patentanspruchs 1 und ihre Verwendung in Anlagen zur Extraktion von pflanzlichen und tierischen Rohstoffen.

Kolonnen mit vertikal sich erstreckenden Rieselkörpern werden zur kontinuierlichen Abtrennung von flüchtigen Substanzen aus höher siedenden Flüssigkeiten eingesetzt. Die Flüssigkeit wird im Kopf der Kolonne zugegeben und fliesst als dünner Rieselfilm auf der Oberfläche des Rieselkörpers zum Kolonnenboden, wo sie abgezogen wird. Während die Flüssigkeit nach unten fliesst, erfolgt die Abtrennung der flüchtigen Substanzen entweder durch Evakuieren der Kolonne — wobei bei bestimmten Anwendungen zur Verstärkung des Trenneffektes Trägerdampf im Gegenstrom durch die Kolonne geleitet wird — oder durch Kontakt mit erhitztem Trägerdampf bei Normaldruck, der am effektivsten kontinuierlich im Gegenstrom durch die Kolonne geführt wird.

Vielfältige Anwendungsmöglichkeiten bestehen für derartige Vorrichtungen innerhalb von Anlagen zur Extraktion von pflanzlichen und tierischen Rohstoffen. In der DE-OS 32 27 669 ist ihre Verwendung zum Desodorieren und/oder Entsäuern von Speiseölen, Fetten und Estern beschrieben. Bei der dort beschriebenen Vorrichtung fliesst die Flüssigkeit an einem Bündel von vertikal sich erstreckenden Rohren mit gleichmässigem Durchmesser nach unten. An derart aufgebauten Rieselkörpern ist nachteilig, dass die Oberfläche des Flüssigkeitsfilms — das ist die Phasengrenzfläche, an der der Stoffübergang stattfindet — während des Herabfliessens sich sehr langsam, bei vielen Anwendungen zu langsam, austauscht. In diesen Fällen ist man gezwungen, durch Erhitzen der Rohre eine Umwälzung des Films zu erreichen, damit ein ausreichend schneller Stoffübergang stattfindet. Weiterhin lässt sich der Durchmesser der Rohre nicht soweit erweitern, wie es für einen möglichst geringen Druckabfall in der Kolonne wünschenswert wäre, da beim Vergrössern der Durchmesser die Gefahr ansteigt, dass sich Flüssigkeitssträhnen bilden. Beim Auftreten von Strähnen verkleinert sich die Phasengrenze — und damit die Trennwirkung — schlagartig.

Zur Verbesserung des Sauerstoffaustausches sind Rieselkörper mit Oberflächenverformungen, wie Wölbungen oder Einschnürungen, bekannt, die eine erhöhte Turbulenz bewirken und die Entstehung von Strähnen unterdrücken.

Eine Destillationskolonne entsprechend dem einleitenden Teil des Patentanspruchs 1 ist Gegenstand der US-A-2 438 988. Bei dieser Destillationskolonne, bei der die ellipsoidartigen Elemente zu Kugeln entartet sind, ist der Flüssigkeitsverteiler so angeordnet, dass ein Flüssigkeitsfilm auf der Innenfläche des hohlen Rieselkörpers gebildet wird. Der Rieselkörper ist von einem Rohr umschlossen, das einen wesentlich grösseren Durchmesser hat und mit einer Heizmittelzuführung versehen ist; dadurch ist der Rieselkörper von aussen beheizbar.

Bei dieser Destillationskolonne ist die Gefahr, dass an der knickartigen Übergangsstelle zwischen den kugelförmigen Elementen und den Zwischenstücken der Flüssigkeitsfilm überschiesst, d.h. abspritzt bzw. abtropft.

Aus der US-A-2 355 414 ist ein Rieselfilmverdampfer bekannt, bei dem die zu behandelnde Flüssigkeit auf die Aussenfläche des Rieselkörpers geleitet wird. Der Rieselkörper ähnelt einem Wellrohr, dessen Aussenfläche im Längsschnitt einen Verlauf ähnlich einer Sinuskurve hat. Zwischen den Ausbauchungen und den Einschnürungen bestehen daher sanfte, stetige Übergänge. Die Höhe der einzelnen Ausbauchungen ist wesentlich kleiner als der Durchmesser. Dies hat zur Folge, dass der Krümmungsradius der Ausbauchungen relativ klein ist.

Die US-A-2 247 152 beschreibt einen Rieselfilmverdampfer mit mehreren in einem Behälter untergebrachten tafelförmigen Rieselkörpern, die an die im Dampfkesselbau verwendeten Stegrohrtafeln erinnern. Jeder Rieselkörper umfasst mehrere übereinander angeordnete, waagerechte, von einem Heizmedium durchströmte Rohre, wobei je zwei benachbarte Rohre durch einen flachen Steg miteinander verbunden sind. Jedem Rohr sind zu beiden Seiten schräggestellte Spritzbleche zugeordnet.

Durch die DE-C-18 070 ist ein Rieselapparat bekannt geworden, der aus mehreren übereinandergestellten doppelkonusförmigen Behältern besteht. Die Behälter sind innen beheizt und werden auf der Aussenseite mit Flüssigkeit beaufschlagt. Jeder Behälter ist in der Zone seines grössten Durchmessers an der Aussenfläche abgerundet. Dabei haben die Rundungen relativ kleine Krümmungsradien. Die Behälter haben in der Reihenfolge von oben nach unten zunehmende Durchmesser, um bei einem allzu starken Auflauf der Flüssigkeit ein Abspritzen oder direktes Überschiessen zu verhindern.

Der Erfindung liegt die Aufgabe zugrunde, eine Vorrichtung der im einleitenden Teil des Patentanspruchs 1 angegebenen Gattung zu schaffen, bei der die durch die Querschnittsänderungen und Umlenkungen bedingte Turbulenz und wiederholte Durchmischung verbessert wird.

Diese Aufgabe wird durch das kennzeichnende Merkmal des Patentanspruchs 1 gelöst.

Der mit der Erfindung erzielte Vorteil beruht darauf, dass die Aussenfläche des an sich bekannten Rieselkörpers als Rieselfläche verwendet wird. Die ellipsoidartigen Elemente, die im Grenzfall auch als Kugeln ausgebildet sein können, bieten dem Rieselfilm eine grosse Oberfläche, bei der auch in Äquatornähe die Tendenz zum Abspritzen gering ist. Durch die in den Nischen an den Übergangsstellen auftretende Turbulenz wird die Durchmischung der Flüssigkeit intensiviert.

Eine bevorzugte Bemessung der ellipsoidartigen Elemente ist in Anspruch 2 angegeben.

Die Bemessung der Zwischenstücke gemäss Anspruch 3 erlaubt die optimale Unterdrückung von Strähnen.

Bei dem Ausführungsbeispiel gemäss Anspruch 4 wird Flüssigkeit, die von einem Element abspritzt, von dem nächstunteren Element aufgefangen.

Bei einem hohlen Rieselkörper mit Heizmittelzuführung in den Hohlraum gemäss Anspruch 5 kann — falls erforderlich — durch Beheizung der Stoffaustausch weiter intensiviert werden.

Das Merkmal des Anspruchs 6 dient ebenfalls dazu, abgespritzte Flüssigkeit aufzufangen und an das nächstuntere Element weiterzuleiten.

Die Ansprüche 7 bis 11 enthalten Bemessunsangaben bevorzugter Ausführungsbeispiele der Erfindung.

Gegenstand der Ansprüche 12 bis 14 ist die Verwendung besonders angepasster Ausführungsbeispiele der Erfindung für spezielle destillative Trennungen.

Die Zeichnung dient zur Erläuterung der Erfindung anhand verschiedener Ausführungsbeispiele.

Fig. 1 zeigt grob schematisch eine einstufige Kolonne mit mehreren Rieselkörpern, deren ellipsoidartige Elemente im Grenzfall als Kugeln ausgebildet sind.

Figur 2 zeigt grob schematisch eine dreistufige Kolonne mit einem durchgehenden Rieselkörper, der pro Stufe drei Kugeln aufweist.

Fig. 3 zeigt in grösserem Massstab einen Ausschnitt aus einem Rieselkörper mit ellipsoidartigen Elementen, deren vertikaler Durchmesser deutlich grösser ist als der horizontale Durchmesser.

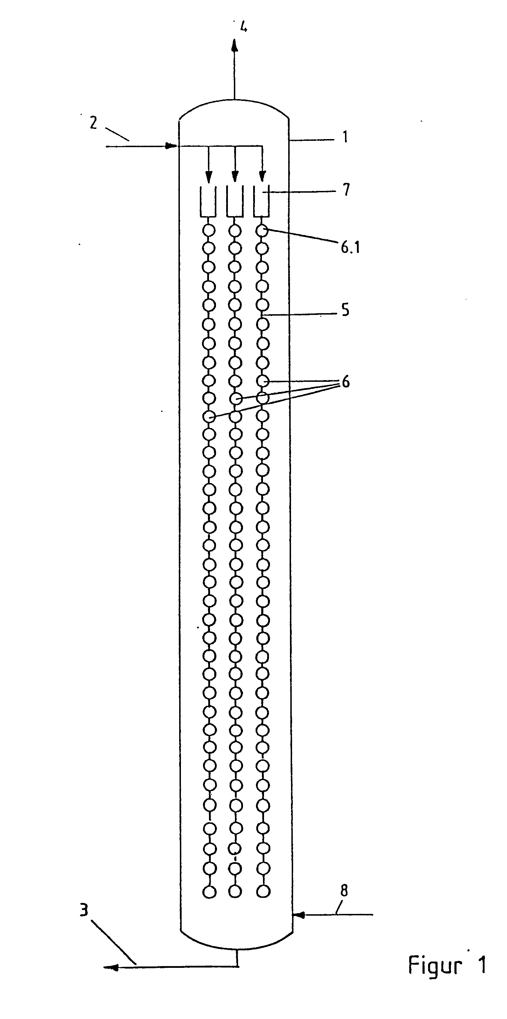

Die in Fig. 1 dargestellte erfindungsgemässe Vorrichtung weist einen aufrechten, gasdichten Behälter 1 mit einem Flüssigkeitszulauf 2 am Kopf und einem Flüssigkeitsablauf 3 am Boden auf.

Am Kopf des Behälters 1 ist ein Brüdenabzug 4 angeschlossen. In dem Behälter 1 sind bis zu 250 Rieselkörper 5 aufgehängt. Die Rieselkörper 5 haben die Form von senkrechten Strängen, von denen drei gezeichnet sind. Die Elemente, auf denen die Rieselkörper 5 aufgebaut sind, sind als Kugeln 6 ausgebildet. Nach Figur 1 sind entsprechende Kugeln 6 der einzelnen Rieselkörper 5 in horizontalen Ebenen angeordnet. Eine versetzte Aufhängung benachbarter Rieselkörper 5 ist ebenfalls möglich. Jeweils oberhalb der obersten Kugel 6.1 eines Rieselkörpers 5 befindet sich ein Flüssigkeitsverteiler 7, von dem die Flüssigkeit auf die äussere Oberfläche der Kugel 6.1 aufgegeben wird. Die Flüssigkeitsverteiler 7 werden von dem Flüssigkeitszulauf 2 gespeist. In den Boden des Behälters 1 mündet eine Trägerdampfzuführung 8.

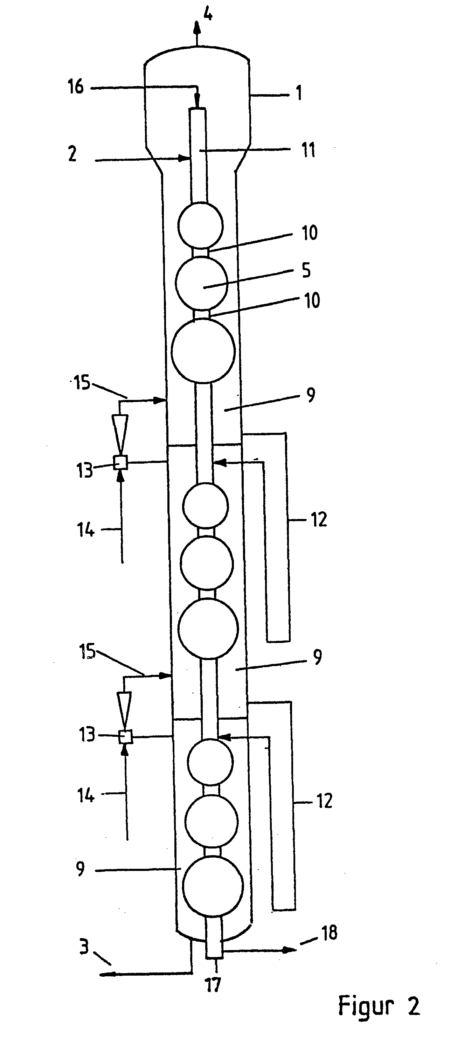

Die 3-stufige Ausführungsform nach Fig. 2 weist einen Rieselkörper 5 auf, der sich durch die drei Stufen 9, die jeweils gasdicht voneinander getrennt sind, erstreckt. Der Rieselkörper 5 besteht aus jeweils drei Kugeln pro Stufe 9, die über zylindrische Zwischenstücke 10 miteinander verbunden sind. Auf diesen Zwischenstücken 10 wird die Flüssigkeit zusammengeführt und auf die nächste Kugel neu verteilt. Um ein Wegspritzen der Flüssigkeit vom Kugeläquator zu verhindern, sind nach einer anderen Ausführungsform der Erfindung die Kugeln jeweils unterhalb ihres Äquators von Spritzschirmen umgeben. Die Spritzschirme verjüngen sich nach unten konisch, wobei der obere, äussere Rand jedes Schirms über den Äquator der jeweiligen Kugel herausreicht und der Durchmesser der unteren Öffnung geringer ist als der Durchmesser der nachfolgenden Kugel.

Die Flüssigkeitszuführung 2, mit der die Flüssigkeit auf die äussere Oberfläche des oberhalb der obersten Kugel überstehenden Rohrstückes 11 aufgegeben wird, ist in Figur 2 nur angedeutet. Die beiden oberen Stufen 9 sind mit den darunter liegenden Stufen 9 jeweils über eine Rohrschleife 12 verbunden, durch die die Flüssigkeit überlaufen kann, ohne dass ein Druckausgleich zwischen den Stufen 9 erfolgt. Im oberen Teil der beiden unteren Stufen 9 ist jeweils eine Pumpe 13 angeschlossen, die mit Treibdampf betrieben wird, der über eine Leitung 14 zugeführt wird. Die Treibdampfableitung 15 ist jeweils mit dem unteren Teil der darüber liegenden Stufe 9 verbunden, da in dieser Ausführungsform der Treibdampf einer Stufe 9 als Trägerdampf für die darüber liegende Stufe 9 verwendet wird. In das obere Rohrende 11 mündet eine Heizmittelzuführung 16 — hier Heizdampf —, vom unteren Rohrende führt eine Leitung 18 weg, mit der das abgekühlte Heizmittel — hier kondensiertes Wasser — abgeführt wird.

Nach einer anderen Ausführungsform der Erfindung besteht der Rieselkörper aus Kugeln mit einem einheitlichen Durchmesser. Bei anderen Anwendungsgebieten sind einstufige Kolonnen mit einem Rieselkörper mit bis zu 20 Kugeln oder Ellipsoiden vorteilhaft.

Die einzelnen Elemente, aus denen sich ein Rieselkörper aufbaut, haben die Form von Ellipsoiden, bei denen das Verhältnis des horizontalen Durchmessers zum vertikalen Durchmesser zwischen 0,5 und 1 liegt; bei dem Verhältnis 1 sind die Ellipsoide, wie bei den Ausführungsformen nach Figur 1 und Figur 2, zu Kugeln entartet. Bei derart gestalteten Elementen 19 ist die Gefahr, dass Flüssigkeit am Äquator wegspritzt, wesentlich verringert. Das Strömungsverhalten der Flüssigkeit wird durch die Zwischenstücke 20 in Form aufrechter Zylinder zwischen den Elementen 19 verbessert.

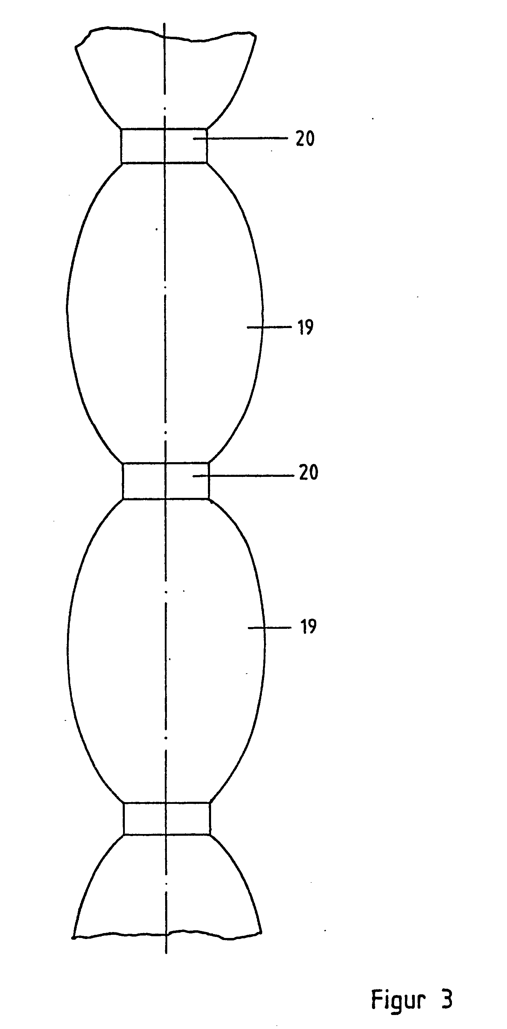

Der Durchmesser der Zwischenstücke 20 beträgt weniger als 80%, vorzugsweise zwischen 20 und 50% des grössten horizontalen Durchmessers der Elemente 19 und ihre Länge zwischen 5 und 100%, vorzugsweise zwischen 10 und 30%, des grössten vertikalen Durchmessers der Elemente 19. In Figur 3 ist ein Ausschnitt eines Stranges mit ellipsoidförmigen Elementen 19 gezeigt, bei denen das Verhältnis zwischen dem horizontalen Durchmessers und dem vertikalen Durchmesser kleiner als 1 ist.

Allen Ausführungsformen ist gemeinsam, dass die Flüssigkeit, aus der die flüchtige Substanz abgetrennt werden soll, kontinuierlich oben auf den Rieselkörper 5 aufgegeben wird. Sie fliesst auf dessen Oberfläche nach unten. In den Bereich, in denen sich der Querschnitt des Rieselkörpers 5 erweitert, wird die Flüssigkeit beschleunigt, bei sich verringerndem Querschnitt wird sie abgebremst. So entstehen innerhalb der Flüssigkeit Wellen, aus denen eine Durchmischung resultiert. Die Durchmischung ist an den Stellen mit geringstem Querschnitt — bei den vorliegenden Ausführungsformen an den Übergangsstellen von einem Element zum nächsten — besonders intensiv, da dort Turbulenzen auftreten.

Auf den Zwischenstücken 10, 20 zwischen zwei Elementen wird die Flüssigkeit gesammelt und neu verteilt. Eventuell auftretende Strähnen werden daher an diesen Stellen unterbrochen, sie können sich nie über den gesamten Strang ausbreiten.

Während die Flüssigkeit, die oberhalb der Siedetemperatur der abzutrennenden Substanz erhitzt ist, nach unten fliesst, wird der Behälter 1 über den Brüdenabzug 4 evakuiert. Die abgetrennten flüchtigen Substanzen werden so aus der Kolonne entfernt. In mehrstufigen Kolonnen erfolgt das Evakuieren jeder Stufe 9 getrennt. Zur Verstärkung des Trenneffektes wird bei einigen Ausführungsformen Trägerdampf im Gegenstrom zur Flüssigkeit durch die Kolonne geführt. Der Druckverlust des Trägerdampfes in der Kolonne ist bei den erfindungsgemässen Vorrichtungen wesentlich verringert, da der von Einbauten freie Querschnitt der Kolonne — durch ihn kann der Trägerdampf durchtreten — vergrössert werden kann.

Es folgen bevorzugte Ausführungsformen für verschiedene Anwendungen:

*Beispiel 1*

Entsäuern und Desodorieren von Speiseöl (200 t/d)

Der Gehalt an freien Fettsäuren wird von ca. 5 Gew.-% auf 0,03 Gew.-% erniedrigt.

Ausführungsform nach Figur 1; Kolonnendurchmesser (am Kopf): 1700 mm

Rieselkörper: 42 Stränge mit jeweils 160 Kugeln mit zylindrischen Zwischenstücken. Kugeldurchmesser : jeweils 80 mm, Länge der Zwischenstücke: 13 mm, Einbaulänge der Stränge: ca. 14 m.

Zulauftemperatur des Rohöls: 265°C

Trägerdampf 0,5 Gew.-% Wasserdampf (bezogen auf das Rohöl)

Kopfdruck in der Kolonne: ca. 530 Pa

Gesamtdruckverlust: weniger als 10 Pa

*Beispiel 2*

Entsäuern und Desodorieren von Kakaobutter (50 t/d)

Der Gehalt an freien Fettsäuren wird von 5 Gew.-% auf 0,03 Gew.-% verringert.

Ausführungsform nach Figur 1; Kolonnendurchmesser (am Kopf): 1100 mm

Rieselkörper: 6 Stränge mit jeweils 80 Kugeln mit zylindrischen Zwischenstücken. Kugeldurchmesser: jeweils 80 mm, Länge des Zwischenstückes: 13 mm, Einbaulänge der Stränge: ca. 7,5 m.

Trägerdampf: 3 Gew.-% Wasserdampf (bezogen auf die Kakaobutter)

Kopfdruck in der Kolonne: ca. 130 Pa

Gesamtdruckverlust: weniger als 13 Pa

*Beispiel 3*

Miscella-Destillation (destillative Trennung von Hexan aus Öl; 160 t/d)

Der Hexan-Anteil im Öl wird von 5 Gew.-% auf 0,05 Gew.-% gesenkt.

3-stufige Ausführungsform nach Figur 2; Kolonnendurchmesser: ca. 1 m, -höhe: ca. 13 m

Rieselkörper: 1 durgehender Strang mit jeweils 3 Kugeln pro Stufe; Kugeldurchmesser: 750 mm, 670 mm, 600 mm. Jeweils 2 Kugeln sind über ein DN 200-Rohr miteinander verbunden. Der Abstand zwischen 2 Kugeln in einer Stufe beträgt ca. 100 mm.

Trägerdampf: ca. 4 Gew.-% Wasserdampf (bezogen auf das Öl)

Systemdruck: unterste Stufe: ca. 0,025 bar absolut
             mittlere Stufe: ca. 0,1 bar absolut
             oberste Stufe: ca. 0,5 bar absolut

Heizmedium im Rohr: Wasserdampf

*Beispiel 4*

Miscella-Destillation nach Beispiel 3
Ausführungsform: 2-stufig
   obere Stufe: 6 Kugeln mit 750 mm Durchmesser
   untere Stufe: 3 Kugeln mit 750 mm Durchmesser
   Kolonnendurchmesser: 1000 mm
   Kolonnenhöhe: ca. 10 m

*Beispiel 5*

Öltrockner (160 t/d)
Die Eingangsfeuchte des Öls wird von 0,2% auf 0,02% gesenkt.
   Ausführungsform nach Figur 2, jedoch 1-stufig
   Rieselkörper: 1 Strang mit 3 Kugeln; Kugeldurchmesser: 500 mm
   Systemdruck: 10 mbar
Um einen Wärmeverlust durch die Trocknung und Entlüftung oder beim Anfahren der Kolonne zu vermeiden, kann der Kugelstrang mit Dampf beheizt werden.

*Beispiel 6*

Destillative Abtrennung von Methylenchlorid aus Hopfen-Weichextrakt
Die Konzentration von Methylenchlorid wird von 90% auf weniger als 5% verringert.
   Ausführungsform: 1-stufig mit Heizdampfzuführung in das Innere des Rieselkörpers.
   Rieselkörper: 1 Strang mit 6 Kugeln mit jeweils 500 mm Durchmesser
   Kolonnendurchmesser: 800 mm, -höhe: 4,5 m

*Beispiel 7*

Regenerierung von Absorptionsöl
Die Hexan-Konzentration im Absorptionsöl aus der Luft-Hexan-Trennung wird von ca. 5 Gew.-% auf weniger als 0,1 Gew.-% erniedrigt.
   Ausführungsform nach Figur 1;
   Rieselkörper: 9 Stränge mit jeweils 30 Ellipsoiden (nach Figur 3). Ellipsoide: 130 mm Höhe, 80 mm Durchmesser
   Trägerdampf: 3 Gew.-% Wasserdampf (bezogen auf das Öl)

*Beispiel 8*

Destillative Abtrennung von Dichloräthan aus Pfefferextrakt
Der Gehalt von Dichloräthan im Pfefferextrakt wird von 4 Gew.-% auf weniger als 10 ppm gesenkt.
   Ausführungsform:
   1-strängig und 1-stufig;
   Rieselkörper: 1 Strang aus 20 Ellipsoiden (nach Figur 3) mit jeweils einer Höhe von 140 mm und einem Durchmesser von 100 mm.
   Kolonnendurchmesser: 200 mm, -höhe: 3,5 m
   Trägerdampf: 3 Gew.-% Wasserdampf (bezogen auf den Extrakt)
   Systemdruck: 5 mbar
   Systemtemperatur: mehr als 130°C.

**Patentansprüche**

1. Vorrichtung zur destillativen Abtrennung von flüchtigen Substanzen aus Flüssigkeiten,

mit einem Behälter (1),
mit einem Flüssigkeitszulauf (2, 7)
und mit mindestens einem in den Behälter (1) eingebauten rotationssymmetrischen Rieselkörper (5),
bestehend aus mehreren übereinander angeordneten ellipsoidartigen Elementen (6, 19) und aus zwischen je zwei benachbarten Elementen (6, 19) angeordneten zylindrischen Zwischenstücken (10, 20) geringeren Durchmessers,
wobei der horizontale Durchmesser eines Elementes (6, 19) nicht grösser als sein vertikaler Durchmesser oder — im Fall der Entartung des Ellipsoids zur Kugel — gleich dem vertikalen Durchmesser ist,
und wobei die Übergänge zwischen den Elementen (6, 19) und den Zwischenstücken (10, 20) auf der Aussenseite knickartig ausgebildet sind,
dadurch gekennzeichnet, dass der Flüssigkeitsverteiler (2, 7) auf die Aussenfläche des Rieselkörpers (5) gerichtet ist.

2. Vorrichtung nach Anspruch 1, gekennzeichnet durch Elemente (6, 19), bei denen das Verhältnis des horizontalen Durchmessers zum vertikalen Durchmesser zwischen 0,5 und 1 beträgt.

3. Vorrichtung nach Anspruch 1 oder 2, gekennzeichnet durch Zwischenstücke (10, 20) mit einem Durchmesser von weniger als 80%, vorzugsweise zwischen 20 und 50%, des horizontalen Durchmessers der Elemente (6, 19) und mit einer Länge von 5-100%, vorzugsweise zwischen 10 und 30% des vertikalen Durchmessers der Elemente.

Vorrichtung nach einem der Ansprüche 1 bis 3, dadurch gekennzeichnet, dass sich der Rieselkörper (5) innerhalb eines Behälters (1) über mehrere gasdicht voneinander getrennte Stufen (9) erstreckt und dass innerhalb der einzelnen Stufen (9) der horizontale Durchmesser in der Reihenfolge von oben nach unten von Element zu Element zunimmt.

5. Vorrichtung nach einem der Ansprüche 1 bis 4, gekennzeichnet durch einen hohlen Rieselkörper (5) und eine Heizmittelführung (16) in den Hohlraum des Rieselkörpers (5).

6. Vorrichtung nach einem der Ansprüche 1 bis 5, dadurch gekennzeichnet, dass die Elemente (6, 19) im Bereich abnehmenden Querschnitts von konisch sich nach unten verjüngenden Spritzschirmen umgeben sind, wobei der obere, äussere Rand der Spritzschirme über den Äquator des Elements (6, 19) hinaus reicht und den Durchmesser der unteren Öffnung kleiner ist als der horizontale Durchmesser des nachfolgenden Elements (6, 19).

7. Vorrichtung nach einem der Ansprüche 1 bis 6, dadurch gekennzeichnet, dass der Rieselkörper (5) 2 bis 25 Elemente (6, 19) aufweist, deren horizontaler Durchmesser zwischen 90 und 1500 mm beträgt.

8. Vorrichtung nach Anspruch 7, gekennzeichnet durch 2 bis 10 Kugeln, deren Durchmesser 300 bis 1500 mm, vorzugsweise zwischen 400 und 900 mm, beträgt.

9. Vorrichtung nach Anspruch 7, gekennzeichnet durch 15 bis 25 Elemente (6, 19) mit einem horizontalen Durchmesser zwischen 80 und 120 mm und einem vertikalen Durchmesser zwischen 120 mm und 160 mm.

10. Vorrichtung nach einem der Ansprüche 1 bis 6, dadurch gekennzeichnet, dass bis zu 250, vorzugsweise zwischen 5 und 60 Rieselkörper (5) parallel aufgehängt sind und mindestens je 20 Elemente (6, 19) aufweisen, deren horizontaler Durchmesser 10 bis 200 mm, vorzugsweise 50 bis 120 mm, beträgt.

11. Vorrichtung nach Anspruch 10, dadurch gekennzeichnet, dass der minimale Abstand zwischen zwei Rieselkörpern (5) — 500 mm, vorzugsweise 30 — 300 mm beträgt.

12. Verwendung einer Vorrichtung nach Anspruch 8 zum destillativen Abtrennen von Lösungsmittelresten aus Extrakten, insbesondere von Hexan aus Speiseölen und -fetten und von Methylenchlorid aus Hopfen-Weichextrakten, oder zum Trocknen von Speiseöl.

13. Verwendung einer Vorrichtung nach Anspruch 9 zur Trennung von Lösungsmitteln aus Drogenextrakten.

14. Verwendung einer Vorrichtung nach Anspruch 10 zum Entsäuern und Desodorieren von Speiseölen und -fetten oder zum Regenerieren von Absorptionsölen.

## Claims

1. Device for the separation by distillation of volatile substances from liquids,
with a container (1),
with a liquid inled (2, 7)
and with at least one rotationally symmetrical trickling body (5) incorporated in the container (1),
comprising a plurality of elipsoidal elements (6, 19) arranged on top of one another and cylindrical intermediate pieces (10, 20) of smaller diameter each arranged between every two adjacent elements (6, 19),
whereby the horizontal diameter of an element (6, 19) is not larger than its vertical diameter or — in the case of degeneration of the ellipsoid to a sphere — is equal to the vertical diameter,
and whereby the transitions between the elements (6, 19) and the intermediate pieces (10, 20) on the outside are formed like a bend,
characterised in that the liquid distributor (2, 7) is directed towards the outside surface of the trickling body (5).

2. Device according to Claim 1, characterised by elements (6, 19) wherein the ratio of the horizontal diameter to the vertical diameter is between 0.5 and 1.

3. Device according to Claim 1 or 2, characterised by intermediate pieces (10, 20) with a diameter of less than 80%, preferably between 20 and 50%, of the horizontal diameter of the elements (6, 19) and with a length of 5-100%, preferably between 10 and 30%, of the vertical diameter of the elements.

4. Device according to one of Claims 1 to 3, characterised in that the trickling body (5) extends within a container (1) over a number of stages (9) separated from one another in a gas-tight manner, and in that within the individual stages (9) the horizontal diameter increase in the sequence from top to bottom from element to element.

5. Device according to one of Claims 1 to 4, characterised by a hollow trickling body (5) and a heating agent supply (16) in the cavity of the trickling body (5).

6. Device according to one of Claims 1 to 5, characterised in that the elements (6, 19) in the area of decreasing cross-section are surrounded by conical spray screens tapering downwards, whereby the upper, outer edge of the spray screen extends beyond the equator of the element (6, 19), and the diameter of the lower opening is smaller than the horizontal diameter of the next element (6, 19).

7. Device according to one of Claims 1 to 6, characterised in that the trickling body (5) has 2 to 25 elements (6, 19), the horizontal diameter whereof is between 90 and 1500 mm.

8. Device according to Claim 7, characterised by 2 to 10 spheres, the diameter whereof is 300 to 1500 mm, preferably between 400 and 900 mm.

9. Device according to Claim 7, characterised by 15 to 25 elements (6, 19) with a horizontal diameter between 80 and 120 mm and a vertical diameter between 120 and 160 mm.

10. Device according to one of Claims 1 to 6, characterised in that up to 250, preferably between 5 and 60, trickling bodies (5) are suspended parallel and have at least 20 elements (6, 19) each, the horizontal diameter whereof is 10 to 200 mm, preferably 50 to 120 mm.

11. Device according to Claim 10, characterised in that the minimum distance between two trickling bodies (5) is 5-500 mm, preferably 30-300 mm.

12. Use of a device according to Claim 8 for the separation by distillation of solvent residues from extracts, especially of hexane from edible oils and fats and of methylene chloride from soft hop extracts, or for drying edible oil.

13. Use of a device according to Claim 9 for separating solvent residues from drug extracts.

14. Use of a device according to Claim 10 for deacidifying and deodorising edible oils and fats or for regenerating absorption oils.

**Revendications**

1. Dispositif pour séparer par distillation des substances volatiles à partir de liquides, comprenant un récipient (1), une amenée de liquide (2, 7), et au moins un corps de ruissellement (5) à symétrie de révolution, encastré dans le récipient (1) et constitué de plusieurs éléments (6, 19) de type ellipsoïde, agencés l'un au-dessus de l'autre, et de pièces intercalaires (10, 20) cylindriques, agencées entre chaque fois deux éléments (6, 19) voisins et de plus faible diamètre, le diamètre horizontal d'un élément (6, 19) n'étant pas plus grand que son axe vertical ou, dans le cas de la dégénérescence de l'ellipsoïde en une sphère, étant égal à l'axe vertical, les transitions entre les éléments (6, 19) et les pièces intercalaires (10, 20) étant réalisées en formant un coude sur la face externe, caractérisé en ce que le distributeur de liquide (2, 7) est dirigé sur la face externe du corps de ruissellement (5).

2. Dispositif suivant la revendication 1, caractérisé par des éléments (6, 19) dans lesquels le rapport entre le diamètre horizontal et l'axe vertical est compris entre 0,5 et 1.

3. Dispositif suivant l'une des revendications 1 et 2, caractérisé par des pièces intercalaires (10, 20) présentant un diamètre inférieur à 80%, de préférence compris entre 20 et 50%, du diamètre horizontal des éléments (6, 19), et une longueur de 5 à 100%, de préférence comprise entre 10 et 30%, de l'axe vertical des éléments.

4. Dispositif suivant l'une des revendications 1 à 3, caractérisé en ce que le corps de ruissellement (5) s'étend à l'intérieur d'un récipient (1) sur plusieurs étages (9) mutuellement séparés d'une manière étanche aux gaz et en ce que, à l'intérieur des différents étages (9), le diamètre horizontal augmente successivement du haut vers le bas d'élément à élément.

5. Dispositif suivant l'une des revendications 1 à 4, caractérisé par un corps de ruissellement creux (5) et par une amenée d'agent chauffant (16) dans le cavité du corps de ruissellement (5).

6. Dispositif suivant l'une des revendications 1 à 5, caractérisé en ce que les éléments (6, 19) sont, dans la zone de la section transversale décroissante, entourés par des écrans antiprojection, qui s'amincissent vers le bas de manière conique, le bord externe, supérieur, des écrans anti-projection faisant saillie au-dessus de l'équateur de l'élément (6, 19) et le diamètre de l'ouverture inférieure étant plus petit que le diamètre horizontal de l'élément suivant (6, 19).

7. Dispositif suivant l'une des revendications 1 à 6, caractérisé en ce que le corps de ruissellement (5) présente deux à vingt-cinq éléments (6, 19), dont le diamètre horizontal est compris entre 90 et 1500 mm.

8. Dispositif suivant la revendication 7, caractérisé par 2 à 10 sphères, dont le diamètre est compris entre 300 et 1500 mm, de préférence entre 400 et 900 mm.

9. Dispositif suivant la revendication 7, caractérisé par 15 à 25 éléments (6, 19) présentant un diamètre horizontal compris entre 80 et 120 mm et un axe vertical compris entre 120 et 160 mm.

10. Dispositif suivant l'une des revendications 1 à 6, caractérisé en ce que jusqu'à 250, de préférence entre 5 et 60, corps de ruissellement (5) sont suspendus parallèlement et en ce qu'ils présentent chacun au moins 20 éléments (6, 19) dont le diamètre horizontal est de 10 à 200 mm, de préférence de 50 à 120 mm.

11. Dispositif suivant la revendication 10, caractérisé en ce que la distance minimale entre deux corps de ruissellement (5) est de 5 à 500 mm, de préférence de 30 à 300 mm.

12. Utilisation d'un dispositif suivant la revendication 8 pour séparer par distillation des résidus de solvant à partir d'extraits, en particulier de l'hexane à partir d'huiles et de graisses alimentaires et du chlorure de méthylène à partir d'extraits doux de houblon, ou pour le séchage d'huile alimentaire.

13. Utilisation d'un dispositif suivant la revendication 9 pour la séparation de résidus de solvant à partir d'extraits de drogues.

14. Utilisation d'un dispositif suivant la revendication 10 pour la désacidification et la désodorisation d'huiles et de graisses alimentaires ou pour le régénération d'huiles d'absorption.

Figur 1

Figur 2

20

19

20

19

Figur 3